# EUROPÄISCHE PATENTSCHRIFT

(11) **EP 3 731 384 B1**
(45) Veröffentlichungstag und Bekanntmachung des Hinweises auf die Patenterteilung: **26.01.2022**
(21) Anmeldenummer: 20170237.0
(22) Anmeldetag: 17.04.2020
(51) Int. Cl.: H02K 7/12, H02K 7/102, H02K 21/02, B21C 47/00, B21C 47/34

(54) **ELEKTROMOTOR UND VERFAHREN ZU SEINEM BETRIEB**
ELECTRIC MOTOR AND METHOD FOR OPERATING THE SAME
MOTEUR ÉLECTRIQUE ET SON PROCÉDÉ DE FONCTIONNEMENT

(30) Priorität: 23.04.2019 DE 102019205789
(43) Veröffentlichungstag der Anmeldung: 28.10.2020
(73) Patentinhaber: SMS Group GmbH, 40237 Düsseldorf (DE)
(72) Erfinder: de Kock, Peter, 46117 Oberhausen (DE); Plate, Frank, 40589 Düsseldorf (DE); Timmerbeul, Walter, 42281 Wuppertal (DE)
(74) Vertreter: Klüppel, Walter

(56) Entgegenhaltungen:
- EP-A1- 3 232 548
- DE-A1- 1 585 948
- DE-A1- 3 637 591
- US-A- 3 227 347
- US-A1- 2007 241 628
- US-A1- 2010 264 768
- US-B1- 6 455 975

## Beschreibung

Die Erfindung betrifft ein Verfahren zum Betrieb eines Elektromotors. Darüber hinaus betrifft die Erfindung einen Haspel zum Auf- oder Abwickeln von Metallband, wobei der Dorn des Haspels mit dem erfindungsgemäßen Elektromotor drehangetrieben wird. Konkret betrifft die Erfindung Elektromotoren mit variabel einstellbarem elektromagnetischem Feld.

Derartige Elektromotoren sind im Stand der Technik grundsätzlich bekannt, so z. B. aus dem Deutschen Offenlegungsschriften DE 39 40 487 A1, DE 36 37 591 A1 oder DE 10 2007 011 655 A1 oder aus dem US-Patent US 6,455,975 B. Die dort offenbarten Elektromotoren weisen jeweils einen Stator und einen Rotor auf mit einem dazwischen befindlichen Luftspalt, wobei die Relativposition des Rotors und des Stators zueinander und damit die Größe des Luftspaltes und damit wiederum die Größe des elektromagnetischen Feldes mit Hilfe eines Stellgliedes variabel einstellbar ist. Dies gilt insbesondere, weil die Rotoren und Statoren im Stand der Technik konisch ausgebildet sind. Durch eine axiale Verschiebung von Rotor und Stator relativ zueinander ändert sich die Größe des Luftspaltes zwischen diesen beiden. Auf diese Weise ist die elektromagnetische wirkende Kraft des Elektromotors während dessen Betrieb stufenlos einstellbar.

Mit der Änderung der Größe des Luftspaltes ist auch die Drehzahl veränderbar. Insofern kann die Veränderung der Relativposition von Stator und Rotor auch als elektrische Bremse fungieren; es fehlt jedoch eine mechanische Bremseinrichtung.

Die Druckschriften DE 15 85 948 A1, US 2010/264 768 A1, US 2007/241 628 A1 und EP 3 232 548 A1 offenbaren jeweils technologische Hintergrundinformationen zum Gegenstand der vorliegenden Erfindung.

Der Erfindung liegt die Aufgabe zugrunde, ein bekanntes Verfahren zum Betrieb eines Elektromotors und einen bekannten Haspel mit einem Elektromotor für eine neue Verwendung zu nutzen.

Diese Aufgabe wird durch das Verfahren gemäß dem Patentanspruch 1 gelöst. Demnach ist das erfindungsgemäße Verfahren dadurch gekennzeichnet, dass der Elektromotor vorgesehen ist zum Drehantreiben eines Haspels zum Abwickeln von Metallband von einem Coil, wobei das Verfahren vor Beginn des Abwickelns folgende Schritte aufweist:
Aufheben einer Halte-Bremswirkung bei dem Haspel durch Separieren der statorseitigen von den rotorseitigen Bremsflächen durch Verschieben des Rotors relativ zu dem Stator aus dem bremsenden Stellbereich in eine Arbeitsposition in dem motorsteuernden Stellbereich mit Hilfe des Stellglieds; Elektrisches Betreiben des Elektromotors zum Drehen des Haspels in einer Drehrichtung entgegen der Transportrichtung des Metallbandes während des späteren Produktionsbetriebs, mit einer Drehzahl, welche kleiner ist als eine Abwickel-Drehzahl des Haspels während des späteren Produktionsbetriebs; Aufschieben des zu einem Coil gewickelten Metallbandes auf einen kollabierten Dorn des Haspels; elektrisches Stoppen der Drehbewegung des Haspels; Spreizen des Haspeldorns zum Festklemmen des Coils auf dem Haspeldorn; elektrisches Drehantreiben des Haspels zusammen mit dem darauf befindlichen Coil zum Abwickeln des Metallbandes in der vorgegebenen Transportrichtung.

Der Begriff "motorsteuernder Stellbereich" meint im Rahmen der vorliegenden Beschreibung denjenigen Stellbereich, in welchem der Stator und der Rotor relativ zueinander verstellt, insbesondere entlang ihrer Symmetrieachse verschoben werden während des Betriebs des Elektromotors. Die Verstellung in dem motorsteuernden Stellbereich dient ausschließlich der variablen Einstellung des elektromagnetischen Feldes und damit zur Einstellung der von Elektromotor zu übertragenden Leistung. Wichtig ist, dass der motorsteuernde Stellbereich in Sinne der vorliegenden Erfindung ausdrücklich nicht so weit reicht, dass die beanspruchten statorseitigen und rotorseitigen Bremsflächen gegeneinander angestellt werden und eine Bremswirkung entfalten.

Im Unterschied dazu meint der Begriff "bremsender Stellbereich" denjenigen Stellbereich des Stellgliedes, welcher eine Kontaktierung der rotorseitigen und der statorseitigen Bremsflächen gegeneinander ermöglicht. Der bremsende Stellbereich ist im Vergleich zu dem motorsteuernden Stellbereich vergleichsweise klein; er erstreckt sich lediglich über denjenigen Stellbereich, welcher für das Andrücken der rotorseitigen und der statorseitigen Bremsflächen mit der unterschiedlichen Anstell- oder Bremskraft benötigt wird. Es ist zwar nicht ausgeschlossen, dass auch durch eine Relativverschiebung von Rotor und Stator im bremsenden Stellbereich eine Änderung des elektromagnetischen Feldes im Luftspalt des Motors realisiert wird; diese Änderung des elektromagnetischen Feldes wird jedoch bei der vorliegenden Erfindung vernachlässigt. Im bremsenden Stellbereich hat die Bremskraftwirkung eine klare Priorität vor einer elektromagnetischen Reduzierung der Drehzahl durch Veränderung des elektromagnetischen Feldes.

Das Vorsehen der mechanischen Bremseinrichtung gemäß der vorliegenden Erfindung bietet den Vorteil, dass die Bremswirkung des Elektromotors gegenüber einer alleinigen Drehzahlreduktion durch Veränderung der Größe des elektromagnetischen Luftspaltes deutlich verstärkt wird. Das gilt insbesondere für eine Bremsung des Elektromotors aus einem laufenden Betrieb heraus. Wichtig ist jedoch auch die Funktion der mechanischen Bremseinrichtung als sogenannte Halte- oder Feststellbremse zum Fixieren von Rotor und Stator relativ zueinander außerhalb des normalen Produktionsbetriebes bzw. Drehbetriebes, d. h. nachdem der Elektromotor zuvor bereits zum Stillstand gekommen ist. Diese Feststellfunktion bzw. Selbsthemmfunktion kann ein Elektromotor normalerweise nicht leisten, weil sein Rotor und Stator nach Abschalten des elektrischen Feldes i. d. R. relativ zueinander verdrehbar sind.

Ein weiterer Vorteil besteht darin, dass das ohnehin für die variable Einstellung der Relativposition von Stator zur Rotor vorhandene Stellglied erfindungsgemäß nun auch zur Betätigung der mechanischen Bremse verwendet wird. Es bedarf deshalb vorteilhafterweise keiner zusätzlichen Stelleinrichtung.

Das erfindungsgemäß beanspruchte System hat auch gegenüber einem herkömmlichen Drehstromantrieb und erst recht gegenüber einem permanenterregten Antrieb große Vorteile. Während der Drehstromantrieb maximal ein Verhältnis von 1 : 2 in der Feldschwächung erreicht, erreicht ein üblicher permanenterregter Antrieb nur ca. 1 : 1,2. Die beanspruchte Verschiebung des Rotors und des Stators relativ zueinander mit variablem Luftspalt und variablem elektromagnetischem Feld bietet den Vorteil, dass auf diese Weise eine größere Feldschwächung realisierbar ist und auch große Leistungen abrufbar sind. Ein ansonsten für große Leistungen erforderlicher Drehstromasynchronmotor mit Getriebe kann kostengünstig durch den beanspruchten Elektromotor mit variabel einstellbarem Luftspalt ersetzt werden.

Gemäß einem ersten Ausführungsbeispiel der Erfindung sind der Rotor und der Stator jeweils konisch mit einem vorzugsweise gleichen Konuswinkel gegenüber einer gemeinsamen Symmetrieachse, gleichbedeutend mit Drehachse, ausgebildet. Die konische Anstellung gewährleistet, dass im Falle einer axialen Verschiebung von Rotor und Stator relativ zueinander auch die Größe des Luftspaltes wunschgemäß mit verändert wird. Alternativ zu einer axialen Verschiebung sind bei anderer Ausbildung von Rotor und Stator auch andere Arten der zur Veränderung der Relativposition von Rotor und Stator denkbar; dann ist eine konische Ausbildung von Rotor und Stator nicht zwingend erforderlich.

Neben dem Rotor und dem Stator sind vorzugsweise auch die statorseitige und die rotorseitige Bremsfläche jeweils konisch ausgebildet mit einem gleichen Neigungswinkel gegenüber der Symmetrie- bzw. Drehachse. Der Neigungswinkel weicht i. d. R. von dem Konuswinkel ab. Der Neigungswinkel ist beliebig, stumpf oder spitz gewählt, sollte jedoch so steil sein, dass eine Selbsthemmung (Festfahren) verhindert wird. Theoretisch sind auch zur Symmetrieachse R senkrechte Bremsflächen denkbar, wenn auch nicht sinnvoll.

Gemäß einem weiteren Ausführungsbeispiel kann die stationäre Bremsfläche in Form einer hochmomentenseitigen Bremsteilfläche und einer niedrigmomentenseitigen Bremsteilfläche ausgebildet sein. Analog kann die rotorseitige Bremsfläche in Form einer hochmomentenseitigen Bremsteilfläche und / oder einer niedrigmomentenseitigen Bremsteilfläche ausgebildet sein. Der bremsende Stellbereich kann dementsprechend einen hochmomentenseitigen Teilbremsbereich und / oder einen niedrigmomentseitigen Teilbremsbereich aufweisen. Das Stellglied ist dann ausgebildet, den Rotor und den Stator in dem hochmomentenseitigen Teilbremsbereich relativ zueinander so zu verfahren, dass die hochmomentenseitigen Bremsteilflächen des Rotors und des Stators mit einer (gewünschten) Bremskraft gegeneinander angestellt werden. Alternativ oder zusätzlich kann das Stellglied ausgebildet sein, den Rotor und den Stator in dem niedrigmomentenseitigen Teilbremsbereich relativ zueinander so zu verfahren, dass die niedrigmomentenseitigen Bremsteilflächen des Rotors und des Stators mit einer (gewünschten) Bremskraft gegeneinander angestellt werden.

Schließlich wird die oben genannte Aufgabe durch den unabhängigen Anspruch 6 gelöst, welcher auf einen Haspel gerichtet ist mit dem erfindungsgemäßen Elektromotor.

Der Beschreibung sind drei Figuren beigefügt, wobei
- Figur 1: einen Elektromotor mit der erfindungsgemäßen Bremseinrichtung während eines Produktionsbetriebes;
- Figur 2: den Elektromotor mit der erfindungsgemäßen Bremseinrichtung in einer ersten Bremsposition mit der Anwendung in einem Haspel;
- Figur 3: den Elektromotor in einer zweiten Bremsposition bei Anwendung in dem Haspel; und
- Figur 4: ein weiteres Ausführungsbeispiel für die Anordnung der Bremsflächen relativ zu Rotor und Stator zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

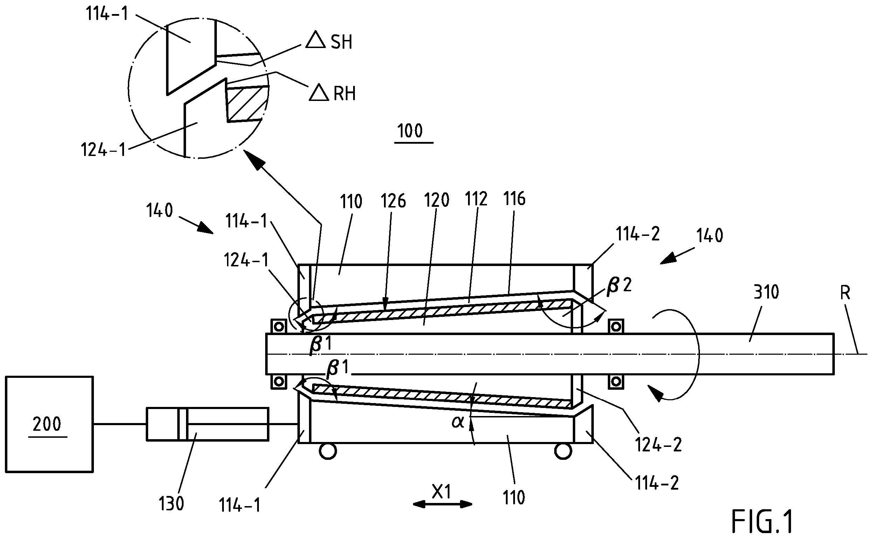

Figur 1 zeigt einen Elektromotor 100 mit einem Stator 110 und einem in dem Stator drehbar gelagerten Rotor 120. Der Rotor 120 ist auf der Welle 310 des Elektromotors montiert. Der Rotor und der Stator sind hier beispielhaft konisch ausgebildet. Die Relativposition von Rotor und Stator ist mit Hilfe eines Stellgliedes 130 variabel einstellbar zur Variation von dem Elektromotor generierten Leistung. Konkret ermöglicht das Stellglied 130 bei dem in Figur 1 gezeigten Ausführungsbeispiel ein Verschieben des Stators 110 in Richtung der Symmetrieachse R relativ zu dem Stator. Aufgrund der konischen Ausbildung von Rotor und Stator ändert sich bei einer axialen Verschiebung von Stator 110 und Rotor 120 relativ zueinander auch die Größe des Luftspaltes 112 zwischen dem Rotor und dem Stator; damit ändert sich auch das elektromagnetische Feld während des Betriebs des Motors und damit auch dessen abgegebene Leistung. Der Konuswinkel des Rotors und des Stators in Bezug auf die Symmetrieachse R ist in Figur 1 mit dem Bezugszeichen α bezeichnet.

Der motorsteuernde Stellbereich, in welchem in Figur 1 der Stator mit Hilfe des Stellgliedes 130 relativ zu dem Rotor in axialer Richtung verschiebbar ist, ist in Figur 1 mit dem Bezugszeichen X1 bezeichnet. Die Verschiebung in Richtung der Symmetrieachse ist nur in dem Ausmaß möglich, wie der Rotor 120 und der Stator 110 noch zumindest teilweise überlappen und sich bei einer gegenseitigen Verschiebung nicht behindern oder gegenseitig berühren.

Besonderes Kennzeichen der vorliegenden Erfindung ist eine mechanische Bremseinrichtung 140 in Form von mindestens einer dem Stator 110 zugeordneten statorseitigen Bremsfläche 114 und mindestens einer dem Rotor 120 zugeordneten rotorseitigen Bremsfläche 124. Es muss jeweils eine statorseitige und eine rotorseitige Bremsfläche gegeneinander angestellt werden, um eine gewünschte Bremswirkung zu entfalten.

Konkret kann die mechanische Bremseinrichtung bei dem hier beanspruchten Elektromotor auf einer Hochmomentenseite und / oder auf einer Niedrigmomentenseite des Elektromotors ausgebildet sein. Die Hochmomentenseite befindet sich an dem Ende des Rotors mit dem kleinen Durchmesser. Umgekehrt befindet sich die Niedrigmomentenseite an dem Ende des Rotors mit dem größeren Durchmesser. Zu diesem Zweck sind dem Rotor und dem Stator jeweis eine hochmomentenseitige und / oder eine niedrigmomentenseitige Bremsfläche 124-1, 124-2 zugeordnet. Beispielsweise ist eine hochmomentenseitige statorseitige Bremsteilfläche 114-1 vorgesehen zum Zusammenwirken mit der rotorseitigen und hochmomentenseitigen Teilbremsfläche 124-1. Alternativ oder zusätzlich kann auf der Niedrigmomentenseite die statorseitige Bremsteilfläche 114-2 gegenüberliegend zu der rotorseitigen Teilbremsfläche 124-2 ausgebildet sein. Die Teilbremsflächen sind mit einem stumpfen Winkel β1, β2 mit β1 < 180°; β2 < 180° in Bezug auf die einander gegenüberliegenden Flächen 116, 126 von Rotor und Stator geneigt. Vorteilhafterweise sind die Teilbremsflächen von Rotor und Stator auf der jeweils gleichen Momentenseite gleichermaßen geneigt. Die Bremsteilflächen auf der Hochmomentenseite und die Bremsteilflächen auf der Niedrigmomentenseite können jedoch durchaus mit unterschiedlichen Winkeln β1, β2 gegenüber der Statorfläche 116 bzw. der Rotorfläche 126 geneigt sein. Außerdem stehen die statorseitigen Teilbremsflächen gegenüber der Statorfläche ein stückweit (ΔSH), beispielsweise nach innen vor und/oder es stehen die rotorseitigen Teilbremsflächen gegenüber der Rotorfläche ein stückweit (ΔRH), beispielsweise nach außen vor. Dadurch wird sichergestellt, dass nicht die Statorfläche 116 und die gegenüberliegende Rotorfläche bei einem Bremsvorgang aneinander reiben. Die besagte Beschränkung der Neigungswinkel β1, β2 und/oder die vorstehende Ausbildung der Bremsteilflächen 114, 124 bietet den Vorteil, dass der Verschiebeweg von Rotor und Stator relativ zueinander auf der Hochmomentenseite und/oder auf der Niedrigmomentenseite mechanisch begrenzt ist und die Bremswirkung dort jeweils zur Entfaltung kommt.

Die elektrische Ansteuerung des Elektromotors 100 und auch die Ansteuerung des Stellgliedes 130 erfolgen vorzugsweise über die Maschinensteuerung 200.

Die Welle des so beschriebenen Elektromotors ist in Figur 1 mit dem Bezugszeichen 310 bezeichnet.

Figur 1 zeigt den erfindungsgemäßen Elektromotor 100 in einer Normalstellung während eines normalen Produktionsbetriebes. Der Begriff "Produktionsbetrieb" steht synonym für einen ungebremsten Betrieb; d. h. während des Produktions- bzw. Drehbetriebes greifen die Bremsteilflächen 114, 124 nicht ineinander und entfalten deshalb keine Bremswirkung. Während des Produktions- bzw. Drehbetriebes sind der Stator 110 und der Rotor 120 in gewissen Grenzen relativ zueinander bewegbar, insbesondere verschiebbar, in Richtung der Symmetrieachse bzw. Drehachse R zur Variation der von dem Elektromotor erzeugten Leistung bzw. Drehzahl. Die Verschiebbarkeit findet jedoch dort ihre Grenzen, wo die rotorseitigen und statorseitigen Bremsteilflächen 114, 124 aufeinander treffen; dort endet der motorsteuernde Stellbereich X1 im Sinne der vorliegenden Erfindung und es beginnt der bremsende Stellbereich X2.

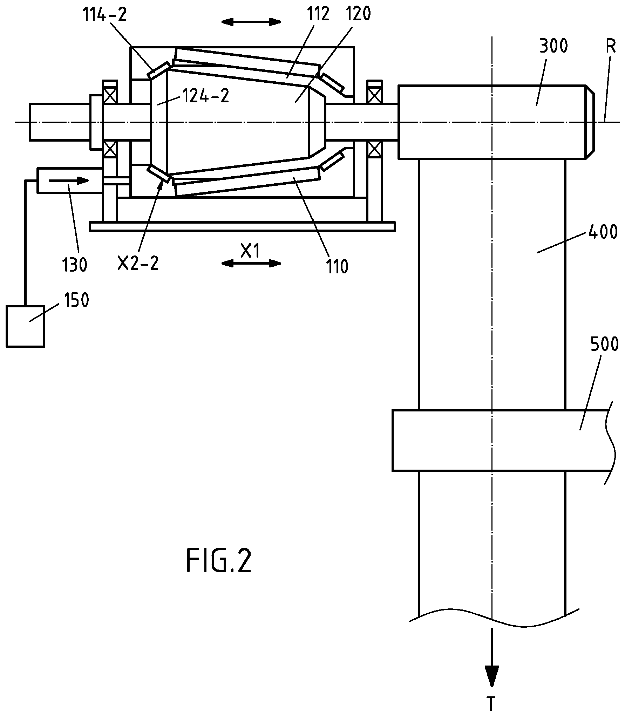

Figur 2 zeigt den erfindungsgemäßen Elektromotor in einer niedrigmomentenseitigen Bremsposition. Konkret sind hier der Stator 110 und der Rotor 120 relativ zueinander axial entlang der Symmetrieachse R mit Hilfe der Stelleinrichtung 130 derart verfahren, dass die niedrigmomentenseitigen Bremsteilflächen des Rotors und des Stators 124-1, 114-1 gegeneinander angestellt sind und deshalb eine Bremswirkung entfalten.

Figur 2 zeigt den erfindungsgemäßen Elektromotor in einem bevorzugten Anwendungsfall, nämlich zum Drehantreiben eines Haspels 300. Der Haspel dient insbesondere zum Aufwickeln von Metallband 400 zu einem Coil oder zum Abwickeln von Metallband von einem derartigen Coil zum Transport des Metallbandes 400 in einer Transportrichtung T in eine nachfolgende Bearbeitungseinrichtung 500, zum Beispiel einem Walzgerüst (Produktionsbetrieb).

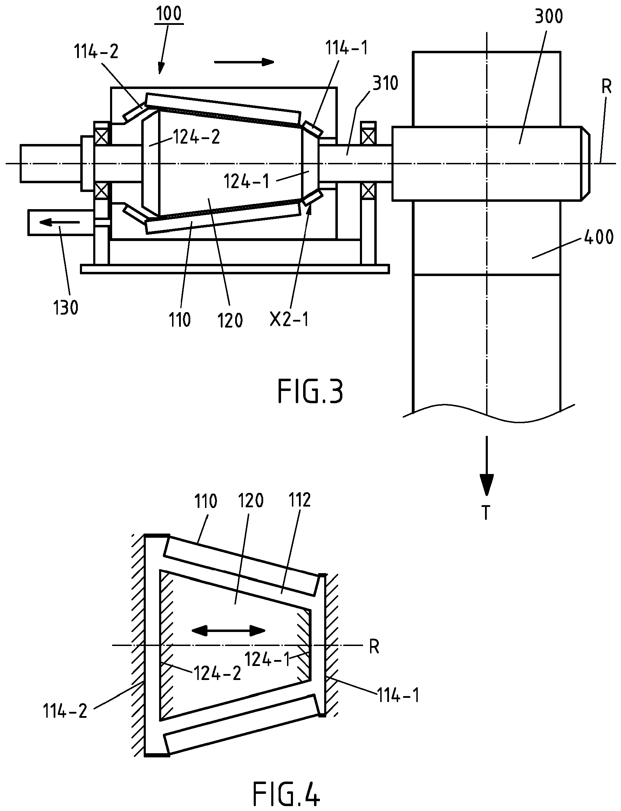

Figur 3 zeigt den erfindungsgemäßen Elektromotor in einer Bremsposition im bremsenden Stellbereich X2-2 auf der Hochmomentenseite.

Das erfindungsgemäße Verfahren zum Betreiben des Elektromotors 100 wird nachfolgend unter Bezugnahme auf die Figuren 2 und 3 näher beschrieben:
Das Verfahren sieht zunächst einen normalen ungebremsten Drehbetrieb des Elektromotors vor, der Elektromotor dient dann insbesondere zum Antreiben einer Vorrichtung, beispielsweise des Haspels 300. Während dieses Produktionsbetriebes sind der Stator 110 und der Rotor 120 relativ zueinander anstellbar, insbesondere axial verschiebbar mit Hilfe des Stellgliedes 130. Die axiale Verschiebung erfolgt lediglich so weit, dass die besagten hochmomentenseitigen oder niedrigmomentenseitigen Bremsteilflächen 114, 124 nicht miteinander in Eingriff stehen und soweit eine Veränderung der Größe des Luftspaltes 112 zwischen dem Rotor und dem Stator zur Steuerung der Drehzahl oder des Drehmomentes des Elektromotors für den Produktionsbetrieb sinnvoll erscheint. Während dieses Drehbetriebs bzw. Produktionsbetriebs des Elektromotors findet eine axiale Verschiebung von Rotor und Stator lediglich in einem motorsteuernden Stellbereich X1 statt. Das Stellglied 130 kann beispielsweise im Rahmen einer Regelung verwendet werden, um z. B. das Drehmoment oder die Drehzahl des Elektromotors auf einem vorbestimmten Sollwert zu halten.

Zum Reduzieren der Drehzahl des Motors während des besagten Drehbetriebes können der Rotor 120 und der Stator 110 relativ zueinander in den sogenannten bremsenden Stellbereich X2 verschoben werden; dies erfolgt jedoch typischerweise nur in Notsituationen, um den Motor dann möglichst schnell zum Stillstand zu bringen. Im Normalfall erfolgt die Reduktion der Drehzahl des Motors durch die besagte axiale Verschiebung von Rotor und Stator und/oder durch Reduzierung der zugeführten elektrischen Leistung.

Typischerweise ist die erfindungsgemäße Bremseinrichtung vorgesehen zum Feststellen von Rotor und Stator relativ zueinander, nachdem der Motor zuvor durch Reduktion der zugeführten elektrischen Leistung oder durch axiale Verschiebung von Rotor und Stator relativ zueinander zum Stillstand gebracht wurde. Dann werden der Rotor und der Stator in den bremsenden Stellbereich X2 verfahren und derart relativ zueinander angestellt, dass die statorseitigen und die rotorseitige Bremsfläche 114, 124 mit einer Bremskraft gegeneinander drücken zum Entfalten der gewünschten Bremswirkung. Der motorsteuernde Stellbereich X1 und der bremsende Stellbereich X2 sind voneinander zu unterscheiden.

Gemäß einem bevorzugten Ausführungsbeispiel dient der Elektromotor 100 zum Drehantreiben eines Haspels 300. Der Haspel dient zu Aufwickeln von Metallband 400 zu einem Coil oder zum Abwickeln des Metallbandes von dem Coil in einer Transportrichtung T.

Vor Beginn des Produktionsbetriebes, d. h. bei diesem besagten Ausführungsbeispiel vor dem Wickelbetrieb durch den Haspel 300 sind gemäß dem erfindungsgemäßen Verfahren folgende Schritte durchzuführen:
Zunächst wird die in Figur 2 gezeigte Bremssituation auf der Niedrigmomentenseite des Elektromotors aufgehoben, indem der Rotor 120 und der Stator 110 mit Hilfe des Stellgliedes 130 relativ zueinander aus dem niedrigmomentenseitigen bremsenden Stellbereich X2-2 in eine Arbeitsposition in dem motorsteuernden Stellbereich X1 verfahren werden. Auf diese Weise werden die niedrigmomentenseitigen statorseitigen Bremsteilflächen 114-1 und die zugeordneten niedrigmomentenseitigen rotorseitigen Bremsteilflächen 124-1 voneinander separiert und auf diese Weise wird die Bremswirkung aufgehoben. Das abzuwickelnde Coil wird zu diesem Zweck auf dem kollabierten Dorn des Haspels 300 aufgeschoben. Vorzugsweise wird der Haspeldorn dabei mit Hilfe des Elektromotors 100 langsam gegen die Transportrichtung T des Metallbandes während des späteren Abwickelvorganges gedreht, um die Innenbindung des Coils nicht zu verkrempeln. Die Drehzahl ist dabei deutlich kleiner als die Drehzahl während des späteren Abwickel- bzw. Produktionsbetriebes. Nach dem Aufschieben des Coils auf den Dorn wird die Drehbewegung des Dorns zunächst gestoppt und anschließend der Haspeldorn gespreizt, um das Coil auf dem Haspeldorn festzuklemmen. Der Haspel 300 bzw. der Haspeldorn wird sodann mit dem darauf befindlichen Coil mit Hilfe des Elektromotors 100 drehangetrieben zum Abwickeln des Metallbandes 400 in der vorgegebenen Transportrichtung T. Das Abwickeln des Metallbandes 400 erfolgt typischerweise zur Durchführung von Bearbeitungsschritten in einer in Transportrichtung nachgeschalteten Bearbeitungseinrichtung 500, z. B. einem Walzgerüst.

Zu Beginn des Abwickelvorgangs wird der Haspel gemeinsam mit den Antrieben einer nachgeschalteten Bearbeitungseinrichtung 500 auf eine Überholgeschwindigkeit beschleunigt und anschließend wird die Drehgeschwindigkeit auf eine normale Abwickelgeschwindigkeit abgesenkt. Durch die Überlagerung der Drehzahlerhöhung des in seinem Radius abnehmenden Coils und durch die Veränderung der Transportgeschwindigkeit des Bandes nimmt das Drehmoment mit steigender Drehzahl ab. Dieser Effekt kann jedoch ausgeregelt werden mit dem Ziel, dass z. B. das Drehmoment während des Abwickelvorganges konstant auf einem vorgegebenen Solldrehmoment gehalten wird. Diese Regelung erfolgt, indem mit Hilfe des Stellgliedes 130 der Luftspalt 112 zwischen dem Rotor 120 und dem Stator 110 in jeweils geeigneter Weise eingestellt wird. Insofern kann durch Verschieben des Rotors und des Stators relativ zueinander immer ein gewünschter optimaler Soll-Betriebszustand, insbesondere ein gewünschtes Soll-Drehmoment des Haspels während des Abwickelvorganges gewährleistet werden.

Nach dem Abwickeln des Coils bzw. nach dem Ausfädeln des Metallbandes von dem Haspel wird der Elektromotor 100 durch eine Reduktion der zugeführten elektrischen Energie oder durch die erfindungsgemäße Relativ-Verschiebung von Rotor und Stator im motorsteuernden Stellbereich X1 gestoppt. Alternativ oder zusätzlich dazu kann die Bremsung auch erfolgen, indem der Rotor und der Stator relativ zueinander so verfahren, dass die mechanische Bremseinrichtung auf der Niedrig- oder Hochmomentenseite aktiviert wird. Dies geschieht dann ebenfalls durch eine entsprechende Ansteuerung des Stellantriebs 130. Nach dem Stoppen des Elektromotors werden dessen Rotor und Stator relativ zueinander mit Hilfe des Stellglieds 130 in eine Bremsposition in dem bremsenden Stellbereich X2, vorzugsweise in den niedrigmomentenseitigen Teilbremsbereich X2-2, verfahren zum Feststellen des Rotors 120 und des Stators 110 relativ zueinander, indem die statorseitigen und die rotorseitigen Bremsflächen 114-2, 124-2 gegeneinander drücken.

Wie zuvor bereits angedeutet, kann die mechanische Bremseinrichtung insbesondere zum schnellen Stoppen des Elektromotors100 im Falle einer Not-Aus Situation verwendet werden. Der Stator 110 und der Rotor 120 des Elektromotors 100 werden dann vor, während oder nach einem Produktionsbetrieb mit Hilfe eines Stellglieds 130 relativ zueinander in entweder den hochmomentenseitigen Teilbremsbereich X2-1 oder den niedrigmomentenseitigen Teilbremsbereich X2-2 verfahren, je nachdem, welcher Teilbremsbereich ausgehend von einer aktuellen Position schneller zu erreichen ist. In dem angefahrenen Teilbremsbereich X2-1, X2-2 werden dann die statorseitigen und die rotorseitigen Bremsteilflächen 114, 124 unter Aufbringung einer Bremskraft durch das Stellglied 130 gegeneinander angestellt zum Reduzieren der Drehzahl des Rotors bis zum Stillstand und zum anschließenden Feststellen des Rotors und des Stators relativ zueinander.

Figur 4 zeigt ein weiteres Ausführungsbeispiel für eine mögliche Anordnung der Bremsflächen 114 und 124 relativ zu dem konischen Rotor 120 und Stator 110. Konkret sind die Bremsflächen hier senkrecht zur Symmetrieachse R ausgebildet. Wahlweise werden entweder die hochmomentenseitigen Bremsflächen 114-1, 124-1 oder die niedrigmomentenseitigen Bremsflächen 114-2, 124-2 gegeneinander angestellt durch Axialverschiebung von Rotor 120 und Stator 110 relativ zueinander.

### Bezugszeichenliste

- 100: Elektromotor
- 110: Stator
- 112: Luftspalt
- 114: statorseitige Bremsflächen
- 114-1: statorseitige hochmomentenseitige Bremsfläche
- 114-2: statorseitige niedrigmomentenseitige Bremsfläche
- 116: Statorfläche
- 120: Rotor
- 124: rotorseitige Bremsflächen
- 124-1: rotorseitige hochmomentenseitige Bremsfläche
- 124-2: rotorseitige niedrigmomentenseitige Bremsfläche
- 126: Rotorfläche
- 130: Stellglied
- 140: mechanische Bremseinrichtung
- 150: Notstromversorgung
- 200: dem Elektromotor zugeordnete Steuerung zum Ansteuern des Stellglieds
- 300: Haspel
- 310: Welle des Elektromotors
- 400: Metallband
- 500: Bearbeitungseinrichtung für das Metallband, beispielsweise Walzgerüst

- X1: motorsteuernder Stellbereich
- X2: bremsender Stellbereich
- X2-1: hochmomentenseitiger Teilbremsbereich
- X2-2: niedrigmomentseitiger Teilbremsbereich
- α: Konuswinkel
- β1, β2: Neigungswinkel
- R: Symmetrieachse (= Drehachse)
- T: Transportrichtung
- ΔSH: Überstand der statorseitigen Teilbremsfläche gegenüber der Statorfäche
- ΔRH: Überstand der rotorseitigen Teilbremsfläche gegenüber der Rotorfläche

## Patentansprüche

1. Verfahren zum Betreiben eines Elektromotors (100) aufweisend einen Stator (110), einen Rotor (120); und ein Stellglied (130) zum variablen Einstellen der Relativposition von Stator (110) und Rotor (120) zueinander und damit der Größe des Luftspaltes (112) zwischen dem Stator und dem Rotor in einem motorsteuernden Stellbereich (X1);
wobei eine mechanische Bremseinrichtung (140) vorgesehen ist mit mindestens einer dem Stator (110) zugeordneten statorseitigen Bremsfläche (114-1, 114-2) und mit mindestens einer dem Rotor (120) zugeordneten rotorseitigen Bremsfläche (124-1, 124-2); und
wobei das Stellglied (130) weiterhin ausgebildet ist zum Anstellen der statorseitigen und der rotorseitigen Bremsfläche (114, 124) mit einer Bremskraft axial gegeneinander durch Einstellen der Relativposition des Rotors und des Stators zueinander in mindestens einem bremsenden Stellbereich (X2), welcher sich von dem motorsteuernden Stellbereich (X1) unterscheidet wobei der Rotor (120) und der Stator (110) des Elektromotors während eines Produktionsbetriebs in dem motorsteuernden Stellbereich (X1) mit Hilfe des Stellglieds (130) relativ zueinander angestellt bzw. verschoben werden zum Einstellen der Drehzahl oder eines Drehmomentes des Elektromotors; wobei der Rotor (120) und der Stator (110) während oder außerhalb des Produktionsbetriebs in einem bremsenden Stellbereich (X2) derart relativ zueinander angestellt werden, dass die statorseitige und die rotorseitige Bremsfläche (114, 124) mit einer Bremskraft gegeneinander drücken zum Entfalten einer Bremswirkung;
**dadurch gekennzeichnet,**
**dass** der Elektromotor (100) vorgesehen ist zum Drehantreiben eines Haspels zum Abwickeln von Metallband (400) von einem Coil, wobei das Verfahren vor Beginn des Abwickelns folgende Schritte aufweist:
Aufheben einer Halte-Bremswirkung bei dem Haspel (300) durch Separieren der statorseitigen von den rotorseitigen Bremsflächen (114, 124) durch Verschieben des Rotors (120) relativ zu dem Stator (110) aus dem bremsenden Stellbereich (X2) in eine Arbeitsposition in dem motorsteuernden Stellbereich (X1) mit Hilfe des Stellglieds (130);
Elektrisches Betreiben des Elektromotors (100) zum Drehen des Haspels (300) in einer Drehrichtung entgegen der Transportrichtung (T) des Metallbandes (400) während des späteren Produktionsbetriebs, mit einer Drehzahl, welche kleiner ist als eine Abwickel-Drehzahl des Haspels während des späteren Produktionsbetriebs;
Aufschieben des zu einem Coil gewickelten Metallbandes auf einen kollabierten Dorn (310) des Haspels (300);
elektrisches Stoppen der Drehbewegung des Haspels (300);
Spreizen des Haspeldorns zum Festklemmen des Coils auf dem Haspeldorn; elektrisches Drehantreiben des Haspels (300) zusammen mit dem darauf befindlichen Coil zum Abwickeln des Metallbandes (400) in der vorgegebenen Transportrichtung (T).

2. Verfahren nach Anspruch 1,
**dadurch gekennzeichnet,**
**dass** nach dem Abwickeln des Coils der Haspel (300) durch geeignete elektrische Ansteuerung des Elektromotors (100) gestoppt wird; und
**dass** nach dem Stoppen des Elektromotors der Rotor (120) und der Stator (110) relativ zueinander mit Hilfe des Stellglieds (130) in eine Bremsposition in dem bremsenden Stellbereich ((X2), vorzugsweise in dem niedrigmomentenseitigen Teilbremsbereich (X2-2) verfahren werden zum Feststellen des Rotors (120) und des Stators (110) relativ zu einander indem die statorseitigen und rotorseitigen Bremsflächen (114-2, 114-1) gegeneinander drücken.

3. Verfahren nach einem der Ansprüche 1 oder 2,
**dadurch gekennzeichnet,**
**dass** im Falle einer Not-Aus Situation vor, während oder nach dem Produktionsbetrieb der Rotor (120) und der Stator (110) mit Hilfe des Stellglieds (130) relativ zueinander in einen hochmomentenseitigen oder einen niedrigmomentenseitigen Teilbremsbereich (X2-1, X2-2) verfahren werden, je nachdem welcher Teilbremsbereich ausgehend von einer aktuellen Relativ-Position schneller zu erreichen ist; und
wobei in dem angefahrenen Teilbremsbereich (X2-1, X2-2) die statorseitigen und die rotorseitigen Bremsflächen (114, 124) unter Aufbringung einer Bremskraft durch das Stellglied (130) gegeneinander angestellt werden zum Reduzieren der Drehzahl des Rotors auf Null und zum anschließenden Feststellen des Rotors und des Stators relativ zueinander.

4. Verfahren nach Anspruch 3,
**dadurch gekennzeichnet,**
**dass** das Stellglied (130) im Falle der Not-Aus Situation von einer Notstromversorgung (140) mit Energie gespeist wird.

5. Verfahren nach einem der Ansprüche 1 bis 4,
**dadurch gekennzeichnet,**
**dass** der Produktionsbetrieb eine Bearbeitung des Metallbandes zum Beispiel durch Walzen in einem dem Haspel (300) in Transportrichtung (T) nachgeschalteten Walzgerüst (500) meint.

6. Haspel (300) zum Aufwickeln eines Metallbandes (400), aufweisend:
einen Haspeldorn (300); und
einen Elektromotor (100) zum Drehantreiben des Haspeldorns (310) zum Aufwickeln eines Metallbandes zu einem Coil und zum Abwickeln des Metallbandes von dem Coil,
**dadurch gekennzeichnet**, das der Elektromotor aufweist:
einen Stator (110),
einen Rotor (120); und
ein Stellglied (130) zum variablen Einstellen der Relativposition von Stator (110) und Rotor (120) zueinander und damit der Größe des Luftspaltes (112) zwischen dem Stator und dem Rotor in einem motorsteuernden Stellbereich (X1);
wobei eine mechanische Bremseinrichtung (140) vorgesehen ist mit mindestens einer dem Stator (110) zugeordneten statorseitigen Bremsfläche (114-1, 114-2) und mit mindestens einer dem Rotor (120) zugeordneten rotorseitigen Bremsfläche (124-1, 124-2); und
wobei das Stellglied (130) weiterhin ausgebildet ist zum Anstellen der statorseitigen und der rotorseitigen Bremsfläche (114, 124) mit einer Bremskraft axial gegeneinander durch Einstellen der Relativposition des Rotors und des Stators zueinander in mindestens einem bremsenden Stellbereich (X2), welcher sich von dem motorsteuernden Stellbereich (X1) unterscheidet; und
wobei der Haspel mit dem Elektromotor (100) ausgebildet ist zur Durchführung des Verfahrens nach einem der vorangegangenen Ansprüche 1 bis 5.

## Claims

1. Method for operating an electric motor (100) comprising a stator (110), a rotor (120) and a setting element (130) for variable setting of the relative position of stator (110) and rotor (120) with respect to one another and thus the size of the air gap (112) between the stator and the rotor in a motor-controlling setting range (X1);
wherein a mechanical braking device (140) is provided, with at least one stator-side brake surface (114-1, 114-2) associated with the stator (110) and at least one rotor-side brake surface (124-1, 124-2) associated with the rotor (120); and
wherein the setting element (130) is in addition configured for adjusting the stator-side and the rotor-side brake surface (114, 124) with a braking force axially relative to one another by setting the relative position of the rotor and the stator with respect to one another in at least one braking setting range (X2) differing from the motor-controlling setting range (X1), wherein the rotor (120) and the stator (110) of the electric motor during a production operation are set or displaced relative to one another in the motor-controlling setting range (X1), with the help of the setting element (130), for setting the rotational speed or a torque of the electric motor;
wherein the rotor (120) and the stator (110) during or outside the production operation are adjusted relative one another in a braking setting range (X2) in such a way that the stator-side and the rotor-side brake surface (114, 124) press against one another by a braking force in order to develop a braking action;
**characterised in that** the electric motor (100) is provided for rotational drive of a coiler for unwinding metal strip (400) from a coil, wherein the method prior to the start of unwinding comprises the following steps:
cancelling a holding brake action at the coiler (300) by separation of the stator-side brake surface (114) from the rotor-side brake surface (124) by displacing the rotor (120) relative to the stator (110) out of the braking setting range (X2) and into a working position in the motor-controlling setting range (X1) with the help of the setting element (130);
electrical operation of the electric motor (100) for rotation of the coiler (300) in a rotational direction opposite to the transport direction (T) of the metal strip (400) during the later production operation, at a rotational speed which is lower than an unwinding rotational speed of the coiler during the later production operation;
pushing the metal strip, which is wound to form a coil, onto a collapsed mandrel (310) of the coiler (300);
electrical stopping of the rotational movement of the coiler (300);
spreading the coiler mandrel for firmly clamping the coil on the coiler mandrel;
electrical rotational drive of the coiler (300) together with the coil disposed thereon for unwinding the metal strip (400) in the predetermined transport direction.

2. Method according to claim 1,
**characterised in that**
after the unwinding of the coil the coiler (300) is stopped by suitable electrical activation of the electric motor (100); and
after the stopping of the electric motor the rotor (120) and stator (110) are moved relative to one another with the help of the setting element (130) into a braking position in the braking setting range (X2), preferably in the part braking range (X2-2) at the low-torque side, for fixing the rotor (120) and the stator (110) relative to one another through the stator-side and rotor-side brake surfaces (114-2, 114-1) pressing against one another.

3. Method according to one of claims 1 and 2,
**characterised in that**
in the case of an emergency off situation before, during or after the production operation the rotor (120) and the stator (110) are moved with the help of the setting element (130) relative to one another into a part braking range (X2-1, X2-2) at a high-torque side or low-torque side depending on which part braking range is more quickly reached starting from a current relative position; and
wherein in the moved-to part braking range (X2-1, X2-2) the stator-side and the rotor-side brake surfaces (114, 124) are adjusted relative to one another under application of a braking force through the setting element (130) so as to reduce the rotational speed of the rotor to zero and to subsequently fix the rotor and the stator relative to one another.

4. Method according to claim 3,
**characterised in that**
the setting element (130) is supplied with energy from an emergency current supply (140) in the case of the emergency off situation.

5. Method according to any one of claims 1 to 4,
**characterised in that**
production operation means processing of the metal strip by, for example, rolling in a roll stand (500) downstream of the coiler (300) in transport direction (T).

6. Coiler (300) for winding up a metal strip (400), comprising:
a coiler mandrel (300); and
an electric motor (100) for rotary drive of coiler mandrel (310) for winding up a metal strip to form a coil and for unwinding the metal strip from the coil,
**characterised in that** the electric motor comprises:
a stator (110),
a rotor (120), and
a setting element (130) for variable setting of the relative position of stator (110) and rotor (120) with respect to one another and thus the size of the air gap (112) between the stator and the rotor in a motor-controlling setting range (X1);
wherein a mechanical braking device (140) is provided, with at least one stator-side brake surface (114-1, 114-2) associated with the stator (110) and at least one rotor-side brake surface (124-1, 124-2) associated with the rotor (120); and
wherein the setting element (130) is further configured for adjusting the stator-side and the rotor-side brake surfaces (114, 124) with a braking force axially relative to one another by setting the relative position of the rotor and the stator with respect to one another in at least one braking setting range (X2) differing from the motor-controlling setting range (X1); and
wherein the coiler together with the electric motor (100) is constructed for performing the method according to any one of the preceding claims 1 to 5.

## Revendications

1. Procédé destiné à l'entraînement d'un moteur électrique (100) qui présente un stator (110), un rotor (120) et un organe de réglage (130) qui est destiné au réglage variable de la position relative du stator (110) et du rotor (120) l'un par rapport à l'autre et par conséquent de la dimension de l'entrefer (112) entre le stator et le rotor dans une plage de réglage (X1) qui commande le moteur ;
dans lequel on prévoit un dispositif de freinage mécanique (140) qui comprend au moins une surface de freinage (114-1, 114-2) du côté du stator, qui est attribuée au stator (110), et qui comprend au moins une surface de freinage (124-1, 124-2) du côté du rotor, qui est attribuée au rotor (120) ; et
dans lequel l'organe de réglage (130) est en outre réalisé pour le positionnement de la surface de freinage (114) du côté du stator et de la surface du freinage (124) du côté du rotor, l'une par rapport à l'autre, en direction axiale, avec une force de freinage par l'intermédiaire du réglage de la position relative du rotor et du stator l'un par rapport à l'autre dans au moins une plage de réglage (X2) qui déclenche un freinage, qui se distingue de la plage de réglage (X1) qui commande le moteur ;
dans lequel le rotor (120) et le stator (110) du moteur électrique sont positionnés, respectivement déplacés l'un par rapport à l'autre au cours d'une mise en oeuvre de production dans la plage de réglage (X1) qui commande le moteur, à l'aide de l'organe de réglage (130), à des fins de réglage de la vitesse de rotation ou d'un couple de rotation du moteur électrique ;
dans lequel le rotor (120) et le stator (110), pendant ou en dehors de la mise en oeuvre d'une production, sont positionnés l'un par rapport à l'autre dans une plage de réglage (X2) qui déclenche un freinage, d'une manière telle que la surface de freinage du côté du stator (114) et la surface de freinage du côté du rotor (124) sont comprimées l'une contre l'autre avec une force de freinage à des fins de déclenchement d'un effet de freinage ;
**caractérisé en ce que** le moteur électrique (100) est prévu pour l'entraînement en rotation d'une bobineuse qui est destinée au dévidage d'une bande métallique (400) à partir d'une bobine ; dans lequel le procédé, avant le début du dévidage, présente les étapes suivantes dans lesquelles :
on supprime un effet d'arrêt-freinage en ce qui concerne la bobineuse (300) par séparation de la surface de freinage (114) du côté du stator par rapport à la surface de freinage du côté du rotor (124) par l'intermédiaire d'un déplacement du rotor (120) par rapport au stator (110), à partir de la plage de réglage (X2) qui déclenche un freinage jusque dans une position de travail dans la plage de réglage (X1) qui commande le moteur, à l'aide de l'organe de réglage (130) ;
on entraîne par voie électrique le moteur électrique (100) à des fins de mise en rotation de la bobineuse (300) dans une direction de rotation à l'encontre de la direction de transport (T) de la bande métallique (400) au cours de la mise en oeuvre d'une production ultérieure, avec une vitesse de rotation qui est inférieure à une vitesse de rotation de dévidage de la bobineuse au cours de la mise en oeuvre d'une production ultérieure ;
on fait glisser la bande métallique enroulée pour obtenir une bobine, sur un mandrin aplati (310) de la bobineuse (300) ;
on arrête par voie électrique le mouvement de rotation de la bobineuse (300) ;
on élargit le mandrin de la bobineuse à des fins de serrage de la bobineuse sur le mandrin de la bobineuse ;
on entraîne en rotation par voie électrique la bobineuse (300) de manière conjointe avec la bobine disposée par-dessus à des fins de dévidage de la bande métallique (400) dans la direction de transport (T) qui a été définie au préalable.

2. Procédé selon la revendication 1, **caractérisé en ce que**, après le dévidage de la bobine à partir de la bobineuse (300), on met le processus à l'arrêt par l'intermédiaire d'une commande électrique appropriée du moteur électrique (100) ; et
**en ce que**, après la mise à l'arrêt du moteur électrique, on déplace le rotor (120) et le stator (110) l'un par rapport à l'autre à l'aide de l'organe de réglage (130) jusque dans une position de freinage dans la plage de réglage (X2) qui génère un freinage, de préférence dans la plage de freinage partiel (X2-2) du côté du couple peu élevé à des fins de fixation du rotor (120) et du stator (110) l'un par rapport à l'autre par le fait de comprimer l'une contre l'autre la surface de freinage (114-2) du côté du stator et la surface de freinage (114-1) du côté du rotor.

3. Procédé selon l'une quelconque des revendications 1 ou 2, **caractérisé en ce que**, dans le cas d'une situation d'arrêt d'urgence, avant, pendant ou après la mise en œuvre d'une production, on déplace le rotor (120) et le stator (110) à l'aide de l'organe de réglage (130) l'un par rapport à l'autre jusque dans une plage de freinage partiel (X2-1) du côté du couple élevé ou dans une plage de freinage partiel (X2-2) du côté du couple peu élevé, en fonction de la plage de freinage partiel qui doit être atteinte au plus vite à partir d'une position relative en vigueur ; et
dans lequel, dans la plage de freinage partiel (X1-1, X2-2) dans laquelle on a fait entrer le rotor et le stator, on positionne la surface de freinage (114) du côté du stator et la surface de freinage (124) du côté du rotor, l'une par rapport à l'autre, par l'intermédiaire du déploiement d'une force de freinage par le biais de l'organe de réglage (130) dans le but de réduire la vitesse de rotation du rotor jusqu'à une valeur nulle et dans le but de la fixation qui s'ensuit du rotor et du stator l'un par rapport à l'autre.

4. Procédé selon la revendication 3, **caractérisé en ce que** l'organe de réglage (130), dans le cas de la situation d'arrêt d'urgence, est alimentée avec de l'énergie en provenance d'une alimentation de secours (140).

5. Procédé selon l'une quelconque des revendications 1 à 4, **caractérisé en ce que** la mise en oeuvre d'une production représente un traitement de la base de la bande métallique, par exemple par l'intermédiaire d'un laminage dans une cage de laminoir (500) qui est montée à la suite de la bobineuse (300) dans la direction de transport (T).

6. Bobineuse (300) destinée à l'enroulement d'une bande métallique (400), qui présente :
un mandrin de bobinage (300) ; et
un moteur électrique (100) destiné à l'entraînement en rotation du mandrin de bobinage (310) à des fins d'enroulement d'une bande métallique pour obtenir une bobine et à des fins de dévidage de la bande métallique à partir de la bobine ;
**caractérisée en ce que** le moteur électrique présente :
un stator (110) ;
un rotor (120) ; et
un organe de réglage (130) destiné au réglage variable de la position relative du stator (110) et du rotor (120) l'un par rapport à l'autre et par conséquent de la dimension de l'entrefer (112) entre le stator et le rotor dans une plage de réglage (X1) qui commande le moteur ;
dans laquelle on prévoit un dispositif de freinage mécanique (140) qui comprend au moins une surface de freinage (114-1, 114-2) du côté du stator, qui est attribuée au stator (110), et qui comprend au moins une surface de freinage (124-1, 124-2) du côté du rotor, qui est attribuée au rotor (120) ; et
dans laquelle l'organe de réglage (130) est en outre réalisé pour le positionnement de la surface de freinage (114) du côté du stator et de la surface du freinage (124) du côté du rotor, l'un par rapport à l'autre, en direction axiale, avec une force de freinage par l'intermédiaire du réglage de la position relative du rotor et du stator l'un par rapport à l'autre dans au moins une plage de réglage (X2) qui déclenche un freinage, qui se distingue de la plage de réglage (X1) qui commande le moteur ; et
dans laquelle la bobineuse de manière conjointe avec le moteur électrique (100) sont réalisés pour la mise en oeuvre du procédé selon l'une quelconque des revendications précédentes 1 à 5.
